# FASCICULE DE BREVET EUROPEEN

(11) **EP 2 991 479 B1**
(45) Date de publication et mention de la délivrance du brevet: **18.10.2017**
(21) Numéro de dépôt: 13716819.1
(22) Date de dépôt: 14.03.2013
(51) Int. Cl.: A01N 1/02

(54) **DISPOSITIF MEDICAL DE CONSERVATION D'UNE CORNÉE**
MEDIZINISCHE VORRICHTUNG ZUR AUFBEWAHRUNG EINER HORNHAUT
MEDICAL DEVICE FOR STORAGE OF A CORNEA

(43) Date de publication de la demande: 09.03.2016
(73) Titulaire: Université Jean-Monnet, 42100 Saint Etienne (FR); Ecole Nationale d'Ingénieurs de Saint Etienne, 42100 Saint Etienne (FR); Etablissement Français du Sang, 93200 La Plaine Saint-Denis (FR)
(72) Inventeur: GAIN, Philippe, 69009 Lyon (FR); THURET, Gilles, 42230 Saint Bonnes les Oules France (FR); LAVERNE-ACQUART, Sophie, 42400 Saint-Chamond (FR); SOUBAIGNE, Sébastien, 42380 Perigneux (FR)
(74) Mandataire: Be IP
(86) Numéro de dépôt international: PCT/FR2013/050530
(87) Numéro de publication internationale: WO 2014/140434

(56) Documents cités:
- EP-A1- 0 262 766
- FR-A1- 2 986 133
- US-A- 5 030 575
- US-A- 5 789 240
- US-A1- 2008 294 149
- M. A. THIEL ET AL: "A simple corneal perfusion chamber for drug penetration and toxicity studies", BRITISH JOURNAL OF OPHTHALMOLOGY, vol. 85, 1 janvier 2001 (2001-01-01), pages 450-453, XP055033125, cité dans la demande

## Description

L'invention se rattache au secteur technique des dispositifs médicaux destinés soit à la conservation longue durée d'une cornée, en vue d'une greffe notamment, soit à l'expérimentation ex vivo sur cornée humaine ou animale.

Selon l'état de la technique, les greffons cornéens sont conservés dans le monde principalement de deux façons : soit à +4°C pendant une courte durée (maximum 10 jours) dans une technique appelée « conservation à froid (cold storage) », soit selon la technique dite d'organoculture à une température allant de +31°C à +37°C. L'organoculture utilise un milieu nutritif dérivé des milieux de culture cellulaire qui permet une conservation de longue durée, jusqu'à cinq semaines. Il s'agit d'une technique séquentielle comprenant une première partie pendant laquelle la cornée devient oedémateuse (son épaisseur double, passant de 500-600 µm à 1000-1200 µm) et se plisse au niveau de sa face postérieure, et une seconde partie durant de 12 à 72 heures pendant laquelle le greffon est immergé dans le même milieu d'organoculture mais additionné d'une macromolécule (Dextran T500 ou poloxamer 188) qui exerce une déturgescence du greffon pour réduire son épaisseur et diminuer le plissement postérieur juste avant la greffe.

Dans ces deux techniques les greffons sont immergés soit dans de simples flacons de verre ou de matière plastique dans lesquels la cornée est libre, soit dans des boites où la cornée est partiellement immobilisée dans une cage ou un panier (tel un étuis de lentille de contact). Dans les deux cas, il n'y a ni circulation de milieu de conservation, ni maintien d'un gradient de pression de part et d'autre de la cornée.

Or, pour être conservé de façon optimale, le greffon doit l'être dans des conditions similaires à celles rencontrées dans son environnement physiologique. Les paramètres physiologiques à reproduire sont notamment ceux de la chambre antérieure de l'oeil, à savoir, une pression intra-oculaire qui est de l'ordre de 18 millimètres de mercure (mmHg) et une température de l'ordre de 31 à 37° C par exemple pour un oeil humain, et une circulation d'un liquide de conservation de la cornée à la fois du coté endothélial (mimant le renouvellement permanent de l'humeur aqueuse) et du coté épithélial (mimant la circulation permanente des larmes). Si ces conditions ne sont pas reproduites, les cellules de la cornée meurent de façon accélérée en particulier dans les zones de plis postérieurs et le stroma cornéen devient oedémateux et perd temporairement sa transparence.

Le brevet américain US 5,789,240 décrit un dispositif de montage de cornées simulant la chambre antérieure de l'oeil. Ce dispositif permet de reproduire les paramètres de pression intra-oculaire, de température et de circulation de liquide intraoculaire mais est destiné uniquement à l'expérimentation de laboratoire pour réaliser des tests de pénétration de médicaments. Ce dispositif ne permet pas la conservation des greffons cornéens avant une greffe de cornée chez un patient. En particulier, il ne permet pas une circulation stérile du liquide conservateur sur les deux côtés de la cornée, c'est-à-dire, à la fois du côté épithélial et endothélial. Il n'est pas transparent de part en part pour permettre une analyse de la cornée sans ouvrir le dispositif. Ainsi la durée de survie de la cornée est obligatoirement courte et incompatible avec une utilisation pour une greffe de cornée.

Le brevet français 2944185 décrit une « chambre de perfusion » pour cornée destinée à être en position verticale uniquement, pour mimer l'écoulement des larmes. Cette chambre de perfusion est destinée elle aussi à l'expérimentation de laboratoire, notamment aux études de toxicité précliniques mais pas à la conservation des greffons cornéens avant greffe. Elle comporte un compartiment endothélial destiné à être rempli de gel pour maintenir la forme de la cornée mais ne comporte pas de circulation de liquide nutritif du coté endothélial. Elle ne comporte pas de système de maintien d'un gradient de pression de part et d'autre de la cornée. Elle n'est pas transparente de part en part.

L'article du British Journal of Ophthalmology 2001;85:450-3 «A simple corneal perfusion chamber for drug penetration and toxicity studies» divulgue une chambre en polycarbonate développée pour recevoir une cornée humaine mais a été testée uniquement avec des cornée de cochons et de chats. Elle comprend une circulation en circuit fermé du liquide mis en mouvement par une pompe péristaltique. Le maintien d'un gradient de pression de 18 mmHg est obtenu par gravité (flacon contenant le liquide de perfusion mis en hauteur). L'épithélium cornéen est en contact avec l'air et le compartiment épithélial n'est pas étanche. Elle n'est pas transparente de part en part. Cette chambre de perfusion n'est pas non plus destinée à la conservation des prélèvements cornéens avant greffe

De plus aucun des dispositifs de l'art antérieur ne permettent d'applanir la cornée pour permettre la réalisation d'usinage LASER du tissu cornéen ou de faciliter l'observation des cellules endothéliales sur une surface plane. Dans l'état de l'art actuel, les cornées sont découpées au LASER femtoseconde sur des supports spécifiques qui ne sont pas ceux aptes à assurer la conservation des greffons. Dans l'état de l'art antérieur, les greffons doivent être extraits de leur milieu de conservation, placés manuellement sur un support spécifique exposé à l'air libre et placés ensuite sous le système de découpe LASER. Pour aplanir la cornée, il est nécessaire d'utiliser un autre dispositif rattaché au LASER lui même et non pas au support du prélèvement cornéen.

Enfin, aucun des dispositifs de l'art antérieur ne revendique la possibilité de réalisation d'une thérapie cellulaire du greffon.

Concernant l'utilisation des dispositifs de l'art antérieur pour l'expérimentation ex vivo portant sur la pénétration de molécules et les études de toxicité, aucun ne réunit les caractéristiques suivantes : permettre la conservation de façon stérile des cornées humaines ou animales sur le très long terme (plusieurs semaines), comporter un gradient de pression du coté endothélial, comporter une circulation de liquide des deux cotés de la cornée, être transparent de part en part, avoir un dispositif d'applanation de la cornée.

L'invention s'est fixée pour but de remédier à ces inconvénients d'une manière simple, sûre, efficace et rationnelle.

Le problème que se propose de résoudre l'invention est donc de réaliser un dispositif de conservation longue durée d'une cornée humaine qui permette :
- une circulation stérile d'un liquide de conservation des deux côtés de la cornée, en créant un gradient de pression entre les deux cotés de la cornée avec une surpression coté endothélial,
- une inspection de part en part de la cornée,
- une applanation du dôme cornéen sans ouvrir le bioréacteur, c'est à dire compromettre la stérilité du prélèvement cornéen.

Le but recherché est donc de maintenir la cornée ex vivo dans un état quasi physiologique afin d'améliorer la conservation des greffons cornéens avant greffe et accessoirement pour la réalisation d'expérimentations ex vivo fondamentales et/ou pré-cliniques.

Le dispositif n'est, bien entendu, pas limité à la conservation de la cornée ou l'expérimentation sur la cornée, dans l'espèce humaine. Il permet aussi l'expérimentation sur cornée de tout espèce animale dont le diamètre cornéen diffère de l'humain. La géométrie du bioréacteur (principalement diamètre du logement central de la cornée), ainsi que les conditions de températures, de pressions et de compositions du liquide de conservation étant variables à souhait en fonction de l'espèce animale de la cornée à conserver.

Pour résoudre un tel problème, il a été conçu et mis au point un dispositif pour la conservation d'une cornée comprenant :
- des moyens de réception et d'emprisonnement du prélèvement cornéen, assujettis à des moyens de mise sous pression de celle-ci, à une pression réglable,
- des moyens d'injection d'un liquide de conservation dans des agencements que présentent les moyens de réception et d'emprisonnement de la cornée,
- des moyens d'applanation du dôme cornéen,
- des moyens de prélèvements de milieu de conservation à des fins d'analyses microbiologique et/ou biochimique, et
- des moyens d'injection de substances dans le bioréacteur sans avoir à l'ouvrir.
L'invention est definie dans les revendications. Ce dispositif est remarquable en ce que les agencements que présentent les moyens de réception et d'emprisonnement de la cornée immobilisent la cornée en pinçant la collerette de sclère qui l'entoure, ce qui permet le contact entre le liquide de conservation et les deux faces de la cornée. Sont ainsi délimités deux espaces appelés chambre endothéliale et chambre épithéliale. Avantageusement le liquide de conservation est à une température comprise entre 1 et 40° C couvrant la gamme des températures utilisées pour la conservation des cornées à travers le monde.

Avantageusement et pour permettre une inspection à tout moment de part en part, de l'état de la cornée, les agencements que présentent les moyens de réception et d'emprisonnement de la cornée comprennent des moyens d'inspection de part en part de la cornée basés sur la transparence des pièces du bioréacteur qui entourent la cornée. Le dispositif comporte trois parties :
- une première partie dénommée pièce intermédiaire servant à la réception et au support du prélèvement cornéen et participant à son emprisonnement avec la seconde partie dénommée couvercle endothélial. La pièce intermédiaire comporte un trou central du diamètre de la cornée (variable selon l'espèce animale). Les bords de ce trou se prolongent par une gorge circulaire destinée à recevoir la sclère. Le prélèvement cornéen est déposée, épithélium vers le bas, sur ce trou et est maintenue par sa collerette de sclère qui repose sur cette gorge. Il existe, au bord de cette gorge, un rebord circulaire qui empêche la cornée de se déplacer latéralement et de sortir du logement ainsi délimité. La cornée est ainsi automatiquement centrée sur le trou de la pièce intermédiaire.
- une deuxième partie dénommée couvercle endothélial, destinée à venir s'emboiter dans la face supérieure de la pièce intermédiaire. Ce couvercle endothélial peut lui-même être formé de deux pièces solidaires qui délimitent un espace, dénommé chambre endothéliale, dans lequel circule le milieu de conservation au contact de la face endothéliale de la cornée. La partie inférieure de ce couvercle est percée d'un trou du même diamètre que celui de la pièce intermédiaire. Les bords de ce trou comportent un relief circulaire destiné à venir correspondre avec la gorge de la pièce intermédiaire pour écraser la sclère de manière à rendre le contact étanche au niveau de la sclère et à bien séparer les chambres endothéliales et épithéliales. La cornée est ainsi solidement emprisonnée entre la pièce intermédiaire et le couvercle endothélial. La partie supérieure du couvercle endothélial est transparente afin de permettre une observation de la cornée sans avoir à ouvrir la chambre endothéliale du bioréacteur.

Le couvercle endothélial comporte une large encoche sur le bord, destinée à permettre le passage d'un objectif de microscope optique droit, d'un microscope spéculaire, d'un tomographe par cohérence optique (OCT) d'un LASER ou de tout autre instrument destiné à l'analyse ou au traitements de la cornée et qui nécessite de s'approcher au plus proche de la cornée.

Entre le couvercle endothélial et la pièce intermédiaire, un système de blocage progressif par deux glissières inclinées (une sur le couvercle endothélial, une sur la pièce intermédiaire) permet de réaliser un écrasement optimal de la collerette sclérale quelle que soit l'épaisseur de celle-ci. Ces glissières sont micro-crénelées à leur surface, ce qui augmente le frottement entre elles et évite un déblocage intempestif lors des manipulations du bioréacteur.
- une troisième partie, dénommée couvercle épithélial, vient se visser dans la face inférieure de la pièce intermédiaire pour former un compartiment étanche du coté de l'épithélium cornéen, formant ainsi une chambre épithéliale. Ce couvercle peut être rapproché de la face épithéliale de la cornée de façon réglable, permettant ainsi de réaliser une applanation contrôlée de la cornée. La surface d'applanation peut être plane ou courbe. Le couvercle épithélial peut être en position non applané (sans contact avec l'épithélium) ou en position d'applanation par un dispositif de réglage pas à pas ou progressif. Le couvercle épithélial est également transparent pour permettre une observation de la cornée sans ouvrir le couvercle épithélial du bioréacteur. Le couvercle peut être enlevé lors de l'utilisation expérimentale (et non lors de la conservation de prélèvements cornéens pour greffe), par exemple lors de tests d'instillation de collyre, de pénétration de molécules à travers la cornée. Cette ouverture du couvercle épithélial ne perturbe pas le maintien de la surpression dans la chambre endothéliale.

Entre ces trois parties, des joints de différentes natures, notamment torique ou quadrilobe, en matériaux biocompatibles assurent l'étanchéité et le maintien de la stérilité

Avantageusement, les deux faces transparentes du couvercle endothélial et du couvercle épithélial sont alignées avec les trous des pièces intermédiaires et du couvercle endothélial. Elles permettent ainsi le passage sans obstacle, de part en part de la cornée, de la lumière, sans avoir à ouvrir le bioréacteur. Il peut s'agir de la lumière visible pour la réalisation des contrôles visuels ou instrumentaux de la cornée par un observateur. A titre d'exemples non limitatifs : analyse de la transparence de la cornée (par exemple par la lampe à fente usuelle des ophtalmologistes), comptage des cellules en particulier endothéliales, recherche d'interface enfouies de chirurgie réfractives. Il peut également s'agir de rayons ultra violets, par exemple pour réaliser le cross-linking du collagène du greffon cornéen. Il peut enfin s'agir de faisceaux LASER destinés à l'analyse (par exemple imagerie par tomographie en cohérence optique), à la thérapie cellulaire (le LASER activant des processus biologiques à l'intérieur de la cornée), ou à la thérapie tissulaire (le LASER découpant la cornée). Enfin, d'autres longueurs d'onde de la lumière sont également susceptibles d'être utilisées à travers le bioréacteur.

Avantageusement, les deux faces du couvercle endothélial et du couvercle épithélial sont réalisées dans un matériau peu réflectif aux ultrasons pour permettre l'analyse échographie de la cornée (par exemple mesure d'épaisseur avant et après découpe LASER) sans ouvrir le bioréacteur.

La chambre endothéliale et la chambre épithéliale comprennent plusieurs orifices. Il existe au minimum et de manière non limitative, au moins trois orifices dans chaque compartiment : un orifice d'entrée de milieu de conservation, un orifice de sortie de milieu de conservation et un orifice supplémentaire dit « technique » (pour prélèvement d'échantillons de milieu ou injection de substances). Le couvercle endothélial comprend également un orifice destiné à recevoir un capteur de pression. Le couvercle épithélial peut également en comporter un. Les moyens de mise sous pression et de contrôle de celle-ci sont réalisés via ces orifices. L'orifice d'entrée de liquide dans le couvercle endothélial se prolonge à l'intérieur de la chambre par une gouttière qui oblige le milieu frais à se déverser au plus près de l'endothélium cornéen.

Les orifices d'entrée/sortie, présents dans les deux chambres, permettent de pouvoir faire circuler le liquide de conservation et de le renouveler pour optimiser la conservation de la cornée.

Ces orifices permettent également de faire varier la pression à l'intérieur des compartiments de manière à avoir continuellement du coté endothélial une surpression. Celle-ci peut être égale à la pression que rencontre la cornée de façon physiologique du coté endothélial ou tout autre pression choisie. Par exemple 12 à 20 mmHg pour une cornée humaine. Cette surpression peut être obtenue en contrôlant le volume injecté dans la chambre endothéliale et le volume de liquide qui en sort.

Par exemple, le milieu de conservation est contenu dans un réservoir sous pression, notamment un infuseur à membrane élastomérique ou à ressort ou à gaz sous pression. La pression peut également être générée par une pompe de type péristaltique ou autre.

Dans un premier exemple de réalisation, le milieu sous pression traverse un limiteur de débit de type capillaire en verre, puis une micro-électrovanne et est injecté dans la chambre endothéliale. L'ouverture et la fermeture de la micro-électrovanne sont contrôlées par un contrôleur électronique selon une consigne prédéterminée par l'utilisateur (par exemple 18 mmHg) et ajustée selon la pression mesurée par un capteur électronique de pression placée dans la chambre endothéliale. Le liquide sortant de la chambre endothéliale traverse un second limiteur de débit avant de traverser la chambre épithéliale puis de se déverser dans un réservoir dit « poubelle » mis en contact avec la pression atmosphérique au travers d'un filtre garantissant la stérilité.

Dans un second exemple de réalisation, le contrôle de la pression est passif : le liquide sous pression est injecté dans la chambre endothéliale. Il ressort et traverse une valve de contrôle dite soupape ou « check valve » choisie pour s'ouvrir à la pression choisie, ainsi la pression dans la chambre endothéliale est maintenue au niveau de la pression d'ouverture de la valve tant que le milieu est injecté.

Les deux orifices « techniques » (celui de la chambre endothéliale et celui de la chambre épithéliale) permettent également de prélever un échantillon du liquide de conservation pour analyse microbiologique (contrôle de stérilité) ou biochimique (modifications des caractéristiques du milieu, notamment du pH), ou bien d'injecter un quelconque produit durant la phase de conservation, tel un colorant (bleu trypan pour le contrôle de la mortalité des cellules) ou un médicament, ou un gène par exemple, sans nécessiter l'ouverture d'un quelconque compartiment, ni manipulation de la cornée. Ceci peut permettre la réalisation d'une thérapie cellulaire du greffon par exemple par injection de réactifs dans la chambre endothéliale, destinés à modifier le comportement biologique des cellules de la cornée (thérapie génique par exemple).

Avantageusement, dans le dispositif selon l'invention, la pièce intermédiaire et le couvercle endothélial comprennent des moyens complémentaires de verrouillage de l'un avec l'autre, permettant de maintenir les compartiments en position solidarisée. Ces moyens complémentaires de verrouillage et de déverrouillage se présentent par exemple comme des glissières en biais permettant d'assurer la compression progressive des deux pièces (couvercle endothélial et pièce intermédiaire) afin de bloquer la cornée de façon optimale par écrasement progressif et contrôlé de la collerette sclérale.

Un tel dispositif est apte à rester fermé depuis le prélèvement de la cornée sur le donneur, jusqu'à la greffe par le chirurgien par exemple. Il est ouvert uniquement au bloc opératoire pour libérer la cornée pour la chirurgie.

D'autres caractéristiques et avantages de l'invention ressortiront clairement de la description qui en est faite ci-après, à titre indicatif et nullement limitatif, en référence aux figures annexées.

Pour une meilleure compréhension de l'invention il est fait référence à plusieurs schémas dont les parties numérotées sont invariables quel que soit le schéma. Par simplification, les parties ou éléments d'une forme de réalisation qui se retrouvent de manière identique ou similaire dans une autre forme de réalisation seront identifiés par les mêmes références numériques et ne seront pas à nouveau décrits.
La figure 1 est une vue en perspective, éclatée des éléments constituant le dispositif : couvercle endothélial, pièce intermédiaire support du prélèvement cornéen, couvercle épithélial avec applanation réglable.
Les figures 2a et 2b sont des vues en perspective respectivement en vue supérieure et inférieure de la pièce intermédiaire support du prélèvement cornéen.
Les figures 3a et 3b sont des vues en perspectives respectivement en vue supérieure et inferieure de l'assemblage des 2 pièces qui constituent le couvercle endothélial.
La figure 4 est une vue en perspective supérieur du couvercle épithélial
Les figures 5a et 5b sont des vues en perspective respectivement en vue de face et en vue arrière du système complémentaire de fermeture entre le couvercle endothéliale et la pièce intermédiaire.
La figure 6 est une vue en perspective et en coupe du dispositif assemblé avec un prélèvement cornéen en place.
La figure 7 est une vue en perspective du dispositif en position fermée avec un prélèvement cornéen en place.
La figure 8 est un schéma de principe du mode de régulation de la surpression dans la chambre endothéliale, utilisant un mode de contrôle électronique.
La figure 9 est un schéma de principe du mode de régulation de la surpression dans la chambre endothéliale, utilisant un mode de contrôle passif sans apport électrique par valve de contrôle passive (soupape ou check valve).

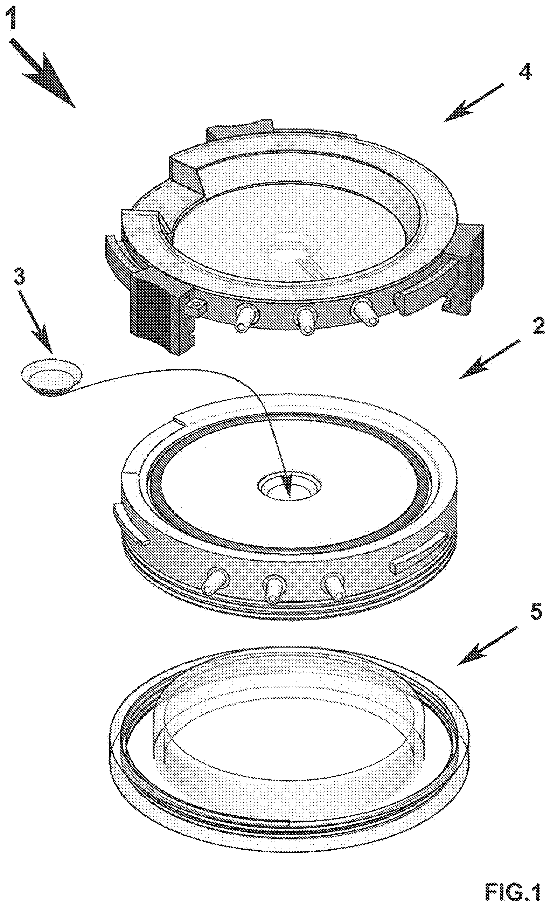

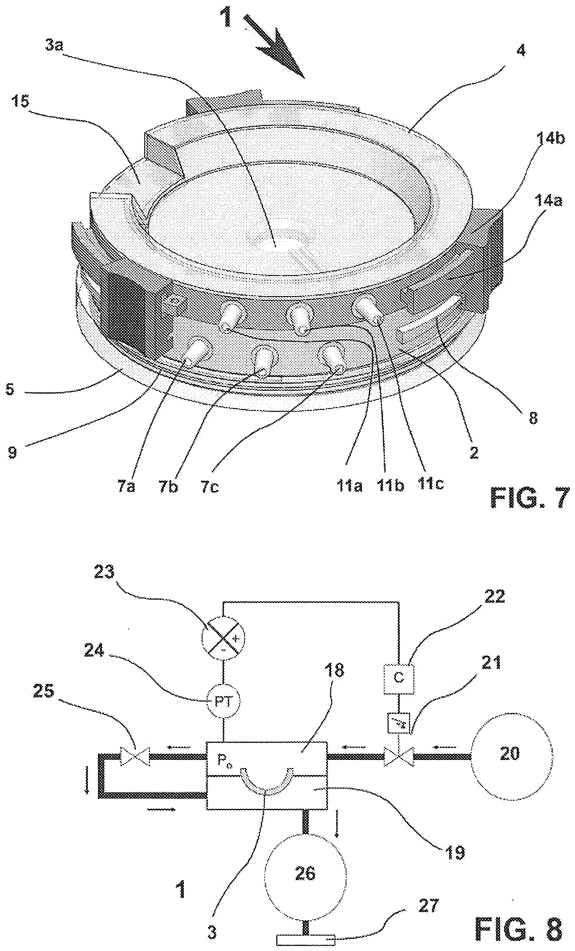

En référence aux figures 1 et 7, le dispositif se présente sous forme d'un bioréacteur (1) comprenant une pièce intermédiaire (2) support du prélèvement cornéen (3), une pièce supérieure dénommée couvercle endothélial (4) et une pièce inférieure dénommée couvercle épithélial (5).

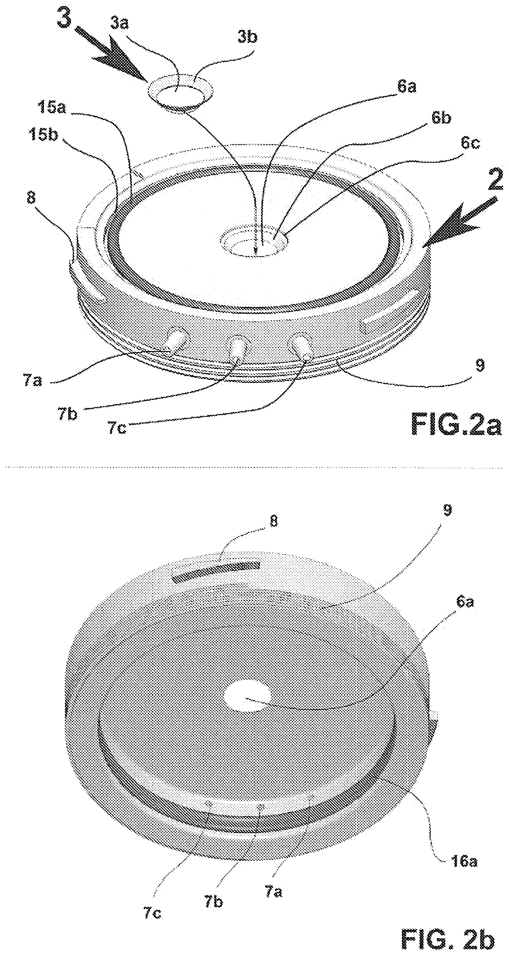

En référence aux figures 2a et 2b, la pièce intermédiaire (2) comporte un trou central (6a) au diamètre de la cornée (3a), entouré d'une gorge circonférentielle (6b) et d'un rebord (6c) formant un logement destiné à recevoir la collerette de sclère (3b). Elle comporte également au moins 3 orifices (7a, 7b, 7c) permettant l'entrée ou la sortie du milieu de conservation ou de toute autre substance du coté épithélial de la cornée (3a). L'orifice (7a) peut servir à l'injection du milieu, le second (7b) à la sortie du milieu, et le troisième (7c) est un orifice dit technique pour l'injection ou le retrait de milieu ou substance supplémentaire sans avoir à interrompre le flux dans les deux premiers orifices. Sur ces orifices peuvent s'adapter des tuyaux de circulation de milieu de conservation ou des bouchons (obturant classiques ou obturant mais perforable par une aiguille stérile pour, par exemple, réaliser des prélèvements ou des injections de substances). Cette pièce intermédiaire comporte des moyens complémentaires de verrouillage (8) avec le couvercle endothélial (4). Ces moyens peuvent être trois glissières (8) placées à 120° sur la circonférence de la pièce intermédiaire (2) et destinées à recevoir un système de verrouillage (14b). Une des faces de la glissière est inclinée par rapport à l'horizontale et permet un serrage progressif du couvercle endothélial (4) sur la pièce intermédiaire (2). Ce serrage écrase la collerette de sclère (3b) qui réalise un véritable joint d'étanchéité entre ces deux pièces. Le plan incliné de la glissière (8) est micro-crénelées afin d'augmenter le frottement avec le plan incliné correspondant du système de verrouillage (14b). Ce frottement accru empêche un déblocage intempestif des 2 pièces lors des manipulations du bioréacteur (1). L'étanchéité avec le couvercle endothélial (4) est assurée au moyen d'un joint annulaire (15a) logé dans une gorge circulaire (15b). A titre d'exemple, ce joint peut être un joint torique (15b). L'étanchéité avec le couvercle épithélial (5) est assurée au moyen d'un joint annulaire (16a) logé dans une gorge circulaire (16b). A titre d'exemple ce joint peut être un joint quadrilobe (16a) choisi pour ses bonnes performances en translation. La pièce intermédiaire comporte aussi un système permettant le réglage de l'applanation de la cornée par le couvercle épithélial (5), par exemple au moyen d'un pas de vis (9) permettant ainsi une applanation réglable.

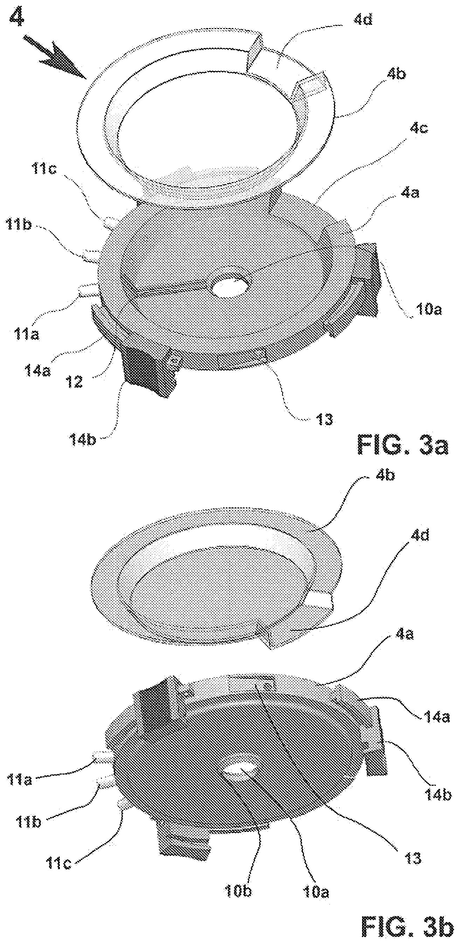

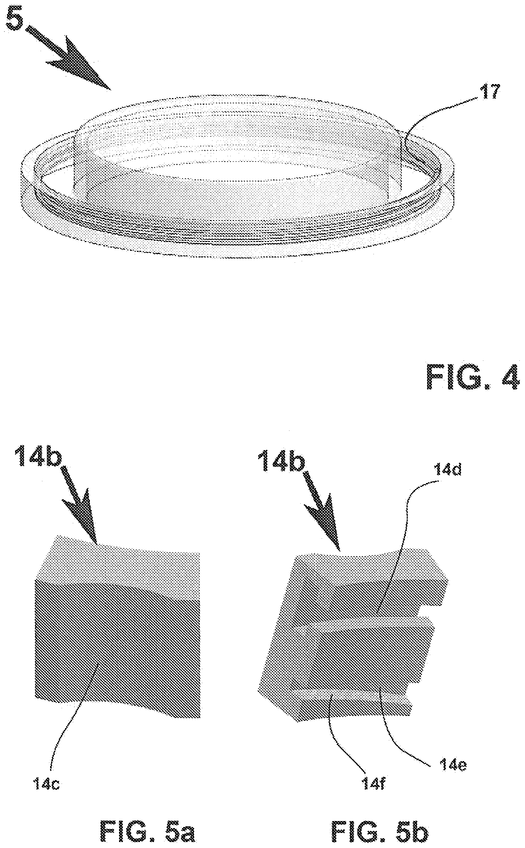

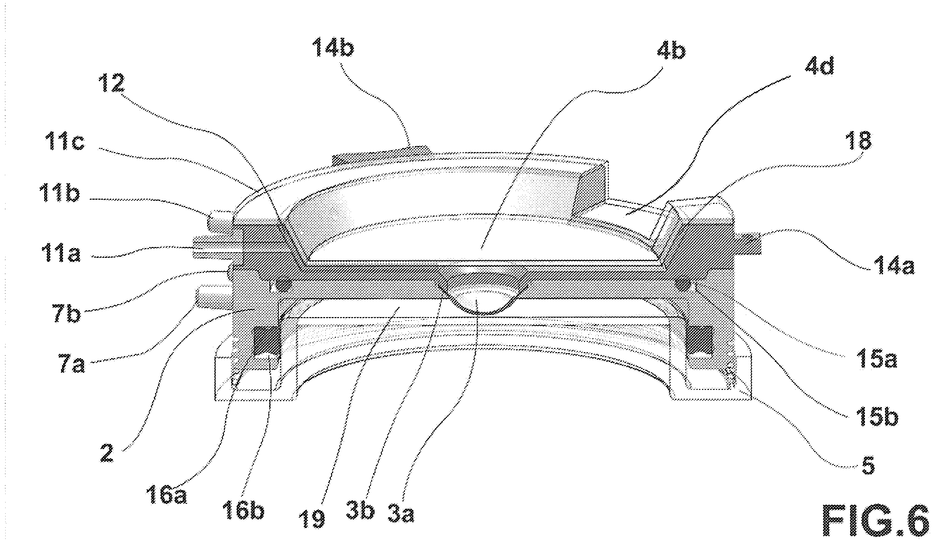

En référence aux figures 3a et 3b, le couvercle endothélial (4) est réalisé en deux parties. Une première partie (4a) faisant office de récipient cylindrique et une deuxième partie (4b) faisant office de couvercle transparent. Ces 2 pièces sont assemblées de façon étanche, par exemple par collage, et délimitent la chambre endothéliale (18 sur la FIG.6). La première partie (4a) comprend, sur son fond, un trou (10a) permettant l'accès du liquide à l'endothélium de la cornée (3a). Les bords (10b) de ce trou (10a) font saillie vers la pièce intermédiaire (3), pour correspondre à la gorge circonférentielle (6b) de manière à emprisonner le prélèvement cornéen en écrasant la sclère (3b) entre la pièce intermédiaire (2) et le couvercle endothélial (4), grâce au système de verrouillage complémentaire (8, 14a, 14b). Les trous de la pièce intermédiaire et du couvercle endothélial sont coaxiaux. La paroi latérale du couvercle endothélial (4a) présente des orifices d'entrée (11a) ou de sortie (11b) de liquide de conservation, destiné à être assujettis à des moyens de mise sous pression du bioréacteur (1), et un orifice «technique» (11c) pour la réalisation de prélèvements ou d'injection d'un milieu de conservation ou de tout autre substance, sans avoir à interrompre le flux dans les deux premiers. Sur ces orifices peuvent s'adapter des tuyaux de circulation de milieu de conservation ou des bouchons (classiques ou perforables). L'orifice (11a) d'injection du milieu de conservation dans la chambre endothéliale débouche dans une gouttière (12) qui dirige le milieu de conservation frais directement sur la face endothéliale de la cornée (3a). La paroi latérale de la pièce (4a) comprend aussi un orifice (13) destiné à recevoir un micro-capteur électronique de pression. Le couvercle endothélial comporte des moyens complémentaires de verrouillage (14a) avec la pièce intermédiaire (2). Ces moyens peuvent être 3 rails (14a) placés à 120° sur la circonférence du couvercle endothélial (4), destinés à recevoir le système de verrouillage (14b). Ce système coulisse sur le rail. Il est décrit en détail Figure 5a et Figure 5b. Le couvercle endothélial (4) est apte à venir s'engager dans la pièce intermédiaire (2) de manière étanche pour délimiter un espace appelé chambre endothéliale (18) en emprisonnant le prélèvement cornéen (3). L'étanchéité est assurée au moyen de joints annulaire torique (15a) logé dans une gorge (15b) réalisée dans la pièce intermédiaire (2). Le couvercle endothélial comporte une large encoche (4c et 4d) sur le bord, destinée à permettre le passage d'un objectif de microscope optique droit, d'un microscope spéculaire, d'un tomographe par cohérence optique (OCT), d'un LASER ou de tout autre instrument destiné à l'analyse ou au traitement de la cornée et qui nécessite de s'approcher au plus proche de la cornée.

En référence à la figure 4, le couvercle épithélial (5) est transparent. Il est apte à venir s'engager dans la pièce intermédiaire (2) de manière étanche pour délimiter un espace appelé chambre épithéliale (19 sur le FIG. 6). Il comporte un système permettant une applanation réglable de la cornée (3) en s'enfonçant dans la pièce intermédiaire. Ce système est par exemple un pas de vis (17) glissant dans le pas de vis complémentaire (9) de la pièce intermédiaire permettant ainsi une applanation précise et choisie à volonté. La surface entrant en contact avec la face épithéliale de la cornée (3a) peut être plane comme représenté ici ou courbe.

En référence aux figures 5a et 5b, le système complémentaire de fermeture entre le couvercle endothélial (4) et la pièce intermédiaire (2) est composée d'une part de trois rails (14a) solidaires de la face externe de la pièce 4a du couvercle endothélial sur sa circonférence et disposées à 120°, et d'autre part de 3 systèmes de verrouillage (14b) qui coulissent sur les rails (14a). La partie supérieure du système de verrouillage (14b) comporte une gouttière en T (14d) apte à venir coulisser sur le rail (14a) de forme complémentaire. La partie inférieure du système de fermeture (14b) comporte une gouttière (14e) dont un des bords est réalisé en biais (14f). Cette partie en biais (14f) est apte à venir au contact d'un rail (8) lui aussi réalisé en biais et solidaire de la pièce intermédiaire (2), de sorte que la translation du système de fermeture (14b) sur le rail (14a) viennent affronter ces 2 surfaces en biais et provoque le serrage progressif du couvercle endothélial (4) sur le pièce intermédiaire (2). Ce serrage écrase la collerette de sclère (3b) entre les surfaces 6b et 10b qui bordent les trous 6a et 10a respectivement de la pièce intermédiaire (2) et du couvercle endothélial (4). Le serrage réalisé sur la sclère (3b) immobilise parfaitement le prélèvement cornéen (3) tout en respectant l'intégrité de la cornée (3a). Les deux parties en biais du rail (8) et du système de verrouillage (14b) sont microcrénelées afin de faciliter leur blocage l'une sur l'autre et empêcher un déblocage intempestif. La partie externe (14c) du système de verrouillage est également micro crénelée pour faciliter la saisie entre les doigts.

En référence à la figure 6, le bioréacteur (1) est transparent de part en part en regard de la cornée (3) grâce aux parois transparentes des couvercles endothélial (4) et épithélial (5), situées en face des deux trous coaxiaux (6a et 10a) respectivement des pièces intermédiaires (2) et du couvercle endothélial (4). Cette transparence permet le passage sans obstacle de la lumière visible (contrôles visuels ou instrumentaux de la cornée par un observateur), des rayons ultra violet (par exemple pour le cross-linking du collagène de la cornée), de faisceaux LASER destinés à l'analyse (par exemple imagerie par tomographie en cohérence optique), la thérapie cellulaire (activation de processus biologiques à l'intérieur de la cornée), ou la thérapie tissulaire (découpe de la cornée), ou de tout autre longueur d'onde de la lumière. L'ensemble de ces opérations peut être effectué à tout moment et sans avoir à ouvrir le bioréacteur. Le couvercle endothélial (4), une fois refermé sur la pièce intermédiaire (2) délimite la chambre endothéliale (18). L'espace entre la pièce intermédiaire (2) et le couvercle épithélial (5) délimite la chambre épithéliale (19).

En pratique, l'utilisation du bioréacteur (1), en vue d'une greffe de cornée se décompose en trois étapes : étape 1 de prélèvement sur le donneur, étape 2 de conservation par la banque de cornée puis étape 3 de greffe au bloc opératoire.

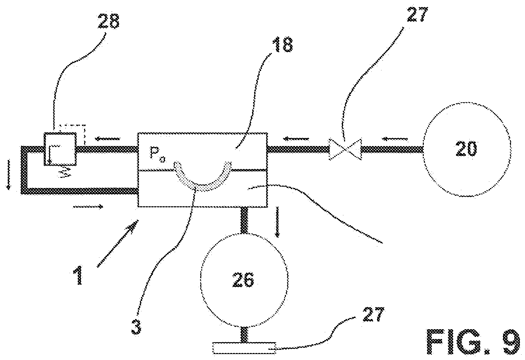

Lors de l'étape 1 de prélèvement, la pièce intermédiaire (2) et le couvercle endothélial (4) sont désolidarisés alors que la pièce intermédiaire (2) et le couvercle épithélial (5) sont solidaires. Le prélèvement cornéen (3) est déposé dans le logement formé par les rebords (6b) et (6c) du trou (6a) de la pièce intermédiaire (2). Le couvercle endothélial (4) est ensuite emboité dans la pièce intermédiaire (2), emprisonnant ainsi le prélèvement cornéen (3) entres deux pièces (2, 4) par écrasement de sa collerette sclérale (3b). La cornée (3a) se retrouve ainsi avec sa face endothéliale en communication avec la chambre endothéliale (18) et avec sa face épithéliale en communication avec la chambre épithéliale (19). On ferme ensuite les moyens de verrouillages complémentaires en faisant coulisser avec les doigts les 3 systèmes de verrouillage (14b) sur les rails (14a). Les tuyaux de circulation de milieu de conservation sont alors branchés aux orifices (7a, 7b et 11a, 11b) de la pièce intermédiaire (2) et du couvercle endothélial (4). Dans une autre forme de réalisation, les tuyaux peuvent être d'emblée sertis sur le couvercle endothélial (4) et la pièce intermédiaire (2). Les orifices techniques (7c) et (11c) restent obturés par des bouchons obturant simple ou obturant mais perforables. Les tuyaux sont raccordés aux moyens de mise en circulation du milieu de conservation et de création du gradient de pression avec surpression dans la chambre endothéliale (décrits FIG.8 et FIG.9)

Lors de l'étape 2 de conservation dans une banque de cornée, le bioréacteur permet le maintien de la viabilité des cellules de la cornée, évite l'oedème de la cornée source de perte de la transparence du tissu et limite les plis postérieurs, eux même responsables d'une surmortalité des cellules endothéliales de la cornée. Le bioréacteur peut être utilisé à n'importe quelle température entre 1 et 40° C, selon le type de milieu de conservation. Le bioréacteur ayant l'avantage d'être transparent de part en part et réalisé dans un matériau compatible avec l'utilisation de sonde à ultrason, les contrôles de qualité de la cornée peuvent être réalisés sans ouvrir le bioréacteur. De plus, il est fonctionnel dans n'importe quelle position (horizontale ou verticale) et possède une large encoche dans le couvercle endothélial (4) pour faciliter le passage des instruments de mesure ou de traitement du greffon. A titre d'exemples non limitatifs, ces contrôles de qualités peuvent être : évaluation de la transparence (par examen à la lampe à fente des ophtalmologistes ou tout autre dispositif de quantification de la transparence, mesures d'épaisseur (du greffon entier ou du greffon découpé), comptage des cellules endothéliales soit par microscopie spéculaire sans préparation, soit par microscopie optique classique après préparation du greffon (les réactifs nécessaires à la préparation du greffon peuvent être injectés par l'orifice technique (11c) du couvercle endothélial (4). Par ailleurs, le bioréacteur ayant l'avantage d'être transparent de part en part permet avantageusement de réaliser à n'importe quel moment de cette étape 2 de conservation par la banque, une découpe du greffon par LASER. Celle-ci peut être réalisée indifféremment par la face endothéliale que par la face épithéliale. Elle peut être facilitée par l'applanation de la cornée par le couvercle épithélial (5).

Avantageusement, le bioréacteur peut être utilisé dans n'importe quel sens, mais lors de la position usuelle, le prélèvement cornéen est orienté épithélium vers le bas. Dans cette position, il est impossible aux éventuelles bulles d'air présentes dans le circuit de rester coincées sous le dôme cornéen, coté endothélial. Dans le cas contraire, ces bulles auraient en effet perturbé l'observation de la cornée et l'analyse de l'endothélium cornéen.

Avantageusement le bioréacteur peut également être utilisé verticalement, pour, par exemple un contrôle de la cornée à la lampe à fente usuelle des ophtalmologistes.

Lors de l'étape 2 de conservation, l'observation de l'endothélium cornéen peut, à n'importe quel moment avantageusement être facilitée par l'applanation du dôme cornéen par le couvercle épithélial (5) en supprimant la courbure cornéenne source de difficulté de focalisation et d'erreur de parallaxe.

Lors de l'étape 2 de conservation, les orifices techniques (7c) et (11c) peuvent permettre l'injection de réactifs nécessaires à la réalisation d'une modification des cellules du prélèvement cornéen afin de réaliser une thérapie cellulaire du greffon par exemple par transfection cellulaire par vecteurs viraux, chimiques, ou physico-chimiques.

Lors de l'étape 2, ces orifices techniques peuvent permettre de prélever à n'importe quel moment, des échantillons de milieux de conservation pour réaliser des contrôles de stérilité microbiologique.

Lors de l'étape 3 de greffe au bloc opératoire, si cela n'a pas été effectué à la banque de cornée, le prélèvement cornéen peut être découpé par LASER directement au travers du bioréacteur (1) avec ou sans applanation du dôme cornéen par le couvercle épithélial (5).

Lors de l'étape 3 de greffe au bloc opératoire, le bioréacteur (1) est ouvert au dernier moment avant réalisation de la greffe. Il s'agit du seul moment où le bioréacteur est ouvert. Pour cela les moyens de verrouillage complémentaires (14b) sont déverrouillés par l'infirmière de bloc opératoire pour permettre la séparation du couvercle endothélial (4) et de la pièce intermédiaire (2). Le prélèvement cornéen (3) reste ainsi niché dans la logette centrale de la pièce intermédiaire (2) et le chirurgien le saisi au moyen d'une pince chirurgicale stérile.

En référence à la figure 7, le bioréacteur (1), en position assemblée, est un ensemble étanche renfermant un prélèvement cornée (3) fermement emprisonné entre la pièce intermédiaire (2) et le couvercle endothélial (4). Les orifices des pièces intermédiaires et du couvercle endothélial sont reliés aux moyens de circulation du milieu de conservation et de création du gradient de pression avec surpression du coté endothélial.

Le bioréacteur (1) peut être utilisé et conserver ses propriétés dans n'importe quelle position. Il peut ainsi être disposé devant n'importe quel instrument optique : par exemple, en position verticale il peut être placé devant une lampe à fente d'ophtalmologiste

En référence à la figure 8, le bioréacteur (1) est connecté par des tuyaux au différents éléments qui assurent la circulation du milieu de conservation dans les deux chambres (endothéliales (18) et épithéliales (19)) et le maintien du gradient de pression avec surpression dans la chambre endothéliale. Dans la figure 8, la pression est régulée de façon active par un dispositif électronique. La pression Po dans la chambre endothéliale (18) est supérieure à celle de la chambre épithéliale (19). Cette pression Po est réglable mais peut être typiquement la pression intraoculaire physiologique de 12 à 20 mmHg. A titre d'exemple cette pression peut être régulée de la façon suivante : dans une forme de réalisation, le milieu de conservation est contenu dans un réservoir sous pression (20) (par exemple un infuseur à membrane élastomérique, à ressort ou gaz comprimé), dans une autre forme de réalisation, le milieu de conservation est injecté par une pompe. Ce réservoir permet l'injection de liquide dans la chambre endothéliale (18) du bioréacteur. L'injection est contrôlée (en durée et en fréquence) par une micro-électrovanne (21) selon la pression Po régnant dans la chambre endothéliale. Cette régulation est assurée par une boucle de contrôle comprenant un transducteur de pression (24) qui mesure en permanence ou selon une fréquence préétablie Po. Selon une consigne (23) déterminée par l'opérateur (par exemple 12 à 20 mmHg) le correcteur (22) donne l'ordre d'ouverture ou de fermeture de l'électrovanne. A la sortie de la chambre endothéliale, le liquide de conservation franchit une seconde valve passive (25) qui réduit le débit et évite l'effondrement brutal de Po lorsque l'électrovanne est fermée et qu'aucun liquide n'est injecté. Cette seconde valve peut être par exemple un fin capillaire de verre limiteur de débit ou une valve passive ne s'ouvrant qu'au delà d'une certaine pression (dite check-valve ou soupape). Le milieu de conservation est ensuite envoyé dans la chambre épithéliale (19) puis dans un réservoir servant de « poubelle » (26) et ouvert à la pression atmosphérique au travers d'un filtre (27) empêchant les contaminations microbiologiques rétrogrades.

En référence à la figure 9, le gradient de pression peut également être régulé de façon passive. Le milieu de conservation est contenu dans un réservoir sous pression (20) par exemple un infuseur à membrane élastomérique, à ressort ou gaz comprimé, ou par une pompe. Ce réservoir permet l'injection de liquide dans la chambre endothéliale (18) du bioréacteur (1). A la sortie du réservoir (20), un limiteur de débit (27), par exemple un fin capillaire de verre, permet une injection lente et régulière dans la chambre endothéliale (18). A la sortie de la chambre endothéliale (18) est placée une ou plusieurs valve(s) de contrôle (dite Check valve ou soupape) (28) choisie(s) pour s'ouvrir lorsque Po atteint la pression souhaitée (par exemple 12 à 20 mmHg). Ainsi Po ne dépasse jamais la pression choisie et s'y maintien tant que le milieu est injecté dans la chambre endothéliale (18). Le milieu de conservation est ensuite envoyé dans la chambre épithéliale puis dans un réservoir servant de poubelle (26) et ouvert à la pression atmosphérique au travers d'un filtre (27) empêchant les contaminations microbiologiques rétrogrades.

Il va de soi que l'invention n'est pas limitée à la forme de réalisation décrite ci-dessus à titre d'exemple mais qu'elle s'étend à toutes les formes de réalisations couvertes par les revendications ci-annexées.

L'intérêt biologique et l'intérêt de l'applanation peuvent être exposés comme suit :

Le dispositif revendiqué comprend des moyens (2, 4, 5). Le dispositif revendiqué permet de conserver en vie pendant plusieurs semaines, de manière stérile une cornée humaine en vue d'une greffe de cornée chez un patient et de conserver en vie pendant plusieurs semaines, de manière stérile une cornée humaine ou animale en vue d'expérimentations ex vivo de laboratoire, de recherche fondamentale ou pré-cliniques.

Le gradient de pression réglable entre la face endothéliale et la face épithéliale, avec surpression du coté endothélial limite l'apparition de l'oedème du stroma cornéen, le fait régresser lorsque celui-ci est présent avant la mise en place du prélèvement cornéen dans le bioréacteur, limitant l'apparition des plis postérieurs de la cornée et améliorant la viabilité des cellules de la cornée, en particulier les cellules endothéliales.

Le bioréacteur cornéen peut être utilisé dans n'importe quelle position horizontalement ou verticalement notamment.

Lorsqu'il est utilisé en position horizontale avec l'épithélium cornéen dirigé vers le bas, les éventuelles bulles d'air présentes dans le circuit ne peuvent s'accumuler sous le dôme cornéen et ne perturbent pas l'observation de la cornée.

Le couvercle transparent du compartiment épithélial peut être déplacé de façon précise et réglable pour venir en contact avec l'épithélium cornéen et aplatir (aplaner) le dôme cornéen par une surface plane (ou courbe), afin de faciliter les découpes cornéennes par des procédés LASER.

Ce couvercle qui est réalisé dans une matière transparente et compatible avec le passage des ultrasons permet la réalisation d'échographie ultrasonore, afin de pouvoir mesurer, sans ouvrir le bioréacteur, l'épaisseur de la cornée avant et/ou après découpe au LASER ou par une autre méthode.

Le couvercle épithélial peut être enlevé tout en gardant la surpression dans le compartiment endothélial (18). Ceci peut permettre la réalisation de découpes cornéennes par dissection manuelle ou par microkératome. Ceci peut aussi s'avérer utile dans les expérimentations ex vivo où une instillation de substances est nécessaire sur la face épithéliale de la cornée exposée à l'air environnant.

## Revendications

1. Dispositif (1) de conservation d'un prélèvement cornéen (3) comprenant, des moyens de réception et d'emprisonnement du prélèvement cornéen (3), assujettis à des moyens de création d'un gradient de pression avec surpression du coté endothélial et à des moyens de circulation d'un liquide de conservation dans des agencements que présentent les moyens de réception et d'emprisonnement du prélèvement cornéen (3), dans lequel dispositif :
- le moyen de réception comporte une première partie, dénommée pièce intermédiaire (2) qui comprend un trou (6a) du diamètre de la cornée (3a) entouré d'une gorge circulaire (6b) et d'un rebord (6c) formant un logement destiné à recevoir le prélèvement cornéen (3), ledit logement assure le bon centrage du prélèvement cornéen (3) lors de sa mise dans le dispositif et permet audit prélèvement cornéen de rester stable lors de l'ouverture du dispositif au bloc opératoire ;
- le moyen d'emprisonnement comporte une seconde partie, dénommée couvercle endothélial (4) qui comprend un trou (10a) du diamètre de la cornée (3a) entouré d'un rebord (10b) destiné à venir emprisonner le prélèvement cornéen (3) en écrasant la collerette de sclère (3b) sur la gorge circulaire (6b) de la pièce intermédiaire ;
- le dispositif comporte une troisième partie, dénommée couvercle épithélial (5);
- les moyens de réception et d'emprisonnement du prélèvement cornéen (3) sont adaptés à emprisonner de manière étanche la collerette de sclère (3b) qui entoure la cornée (3a) pour délimiter une chambre endothéliale (18) et une chambre épithéliale (19) séparées dans lesquelles peut circuler du milieu de conservation avec une surpression dans la chambre endothéliale (18) ;
- la chambre endothéliale (18) est constituée par un espace formé entre le couvercle endothélial (4) et la pièce intermédiaire (2), après accouplement étanche dudit couvercle endothélial avec la dite pièce ;
- la chambre épithéliale (19) est constituée par un espace formé entre la partie intermédiaire et le couvercle épithélial (5), après accouplement dudit couvercle épithélial (5) avec ladite pièce (2) ;
- la pièce intermédiaire (2), et le couvercle endothélial (4), comprennent des orifices d'entrée (7a, 11a) et de sortie (7b, 11b) de milieu de conservation auxquels sont reliés les moyens de mise en circulation du milieu de conservation et de création du gradient de pression entre chambre endothélial et chambre épithéliale avec surpression dans la chambre endothéliale.

2. Dispositif (1) selon la revendication 1, ***caractérisé* en ce que** le couvercle endothélial (4) comprend une encoche permettant le passage d'un objectif de microscope ou de tout autre instrument nécessitant d'être au plus proche de la cornée et destiné à l'analyse ou au traitement de la cornée à travers le dispositif.

3. Dispositif (1) selon l'une quelconque des revendications 1 à 2, ***caractérisé* en ce qu'**il est assujetti à des moyens de création d'un gradient de pression réglable entre la face endothéliale et la face épithéliale, avec surpression du coté endothélial, par exemple égal à la pression intra-oculaire physiologique, et à des moyens de circulation d'un liquide de conservation que présentent les moyens de réception et d'emprisonnement (2, 4) du prélèvement cornéen (3).

4. Dispositif (1) selon la revendication 3, ***caractérisé* en ce que** le dispositif est adapté à générer et réguler le gradient de pression réglable entre la face endothéliale et la face épithéliale, avec surpression du coté endothélial soit de façon passive par l'utilisation de valves de contrôle passive s'ouvrant à la pression désirée, soit de façon active par l'asservissement d'une micro-électrovanne contrôlant l'injection du milieu de conservation dans la chambre endothéliale selon une consigne fixée par l'utilisateur et en fonction de la pression dans la chambre endothéliale mesurée par un micro capteur de pression.

5. Dispositif (1) selon l'une quelconque des revendications 1 à 4, ***caractérisé* en ce que** le couvercle endothélial (4) comprend une gouttière (12) en continuité avec l'orifice d'entrée (11a) permettant l'arrivée de milieu de conservation frais directement sur l'endothélium de la cornée (3a).

6. Dispositif (1) selon l'une quelconque des revendications 1 à 4, ***caractérisé* en ce que** les chambres endothéliales (18) et épithéliales (19) comportent des orifices techniques (11c, 7c), aptes à permettre le prélèvement d'échantillon de milieu de conservation à des fins d'analyse microbiologique ou biochimique, ou l'injection de substance quelconque, notamment pour favoriser les comptages cellulaires, sans compromettre la stérilité de l'intérieur du bioréacteur.

7. Dispositif (1) selon l'une quelconque des revendications 1 à 6, ***caractérisé* en ce que** le couvercle endothélial (4) et le couvercle épithélial (5) sont transparents de part en part du prélèvement cornéen (3) permettant l'analyse de toutes les couches de la cornées (3a) sans avoir à ouvrir le bioréacteur cornéen (1).

8. Dispositif (1) selon l'une quelconque des revendications 1 à 7, ***caractérisé* en ce que** le dispositif est adapté à régler la température du liquide de conservation à une température de 1 à 40 degrés Celsius, par exemple à la température physiologique de la cornée.

9. Dispositif (1) selon l'une quelconque des revendications 1 à 8, ***caractérisé* en ce que** le couvercle endothélial (4) est réalisé en deux parties, une première partie (4a) comprenant le trou (10a) et son rebord (10b) servant à l'emprisonnement du prélèvement cornéen (3) par écrasement de la sclère (3b), les orifices d'entrée (11a), de sortie (11b) de liquide, et l'orifice technique (11c), et une deuxième partie (4b) transparente permettant l'observation de part en part de la cornée (3a), et les deux parties (4a, 4b) étant aptes à venir s'emboiter de manière étanche entre elle par exemple par collage.

10. Dispositif (1) selon l'une quelconque des revendications 1 à 9, ***caractérisé* en ce que** le couvercle endothélial (4) et la pièce intermédiaire (2) comprennent des moyens complémentaires de verrouillage de l'un avec l'autre (14a, 14b, 8), permettant de les maintenir en position solidarisée et étanche.

11. Dispositif (1) selon la revendication 10, ***caractérisé* en ce que** les moyens complémentaires de verrouillage se présentent sous la forme de rails (14a) sur le couvercle endothélial (2) aptes à recevoir un système de verrouillage (14b) comportant une gouttière à bord incliné coopérant avec une gouttière (8) réalisée à la circonférence de la pièce intermédiaire (2) et de forme complémentaire, de sorte que lors du glissement du système de verrouillage (14b) sur le rail (14a), les deux surfaces inclinées (14f, 8) s'affrontent, permettant un serrage progressif du couvercle endothélial (4) sur la pièce intermédiaire (2) afin d'assurer la compression optimale de la collerette sclérale (3b) sans endommager la cornée (3a).

12. Dispositif (1) selon la revendication 11, ***caractérisé* en ce que** lesdits moyens complémentaires de verrouillage (8, 14b) comportent sur leur deux bords inclinés des surfaces micro-crénelées empêchant un déblocage intempestif en augmentant le couple de frottement entre elles.

13. Dispositif (1) selon l'une quelconque des revendications 1 à 12, ***caractérisé* en ce que** le couvercle épithélial (5) et la pièce intermédiaire (4) sont assemblés de manière étanche, notamment au moyen d'un joint quadrilobe (16 a), permettant le déplacement du couvercle épithélial (5) par rapport à la pièce intermédiaire (4).

## Patentansprüche

1. Vorrichtung (1) zur Aufbewahrung einer entnommenen Hornhaut (3), umfassend Empfangs- und Einschließungsmittel der entnommenen Hornhaut (3), die mit Mitteln zur Schaffung eines Druckgradienten mit Überdruck auf der endothelialen Seite und mit Zirkulationsmitteln einer Konservierungsflüssigkeit in Anordnungen, welche die Empfangs- und Einschließungsmittel der Hornhautentnahme (3) aufweisen, verbunden sind, in welcher Vorrichtung:
- das Empfangsmittel einen ersten Teil, als Übergangsteil (2) bezeichnet, aufweist, der ein Loch (6a) im Durchmesser der Hornhaut (3a) umfasst, umgeben von einer kreisrunden Nut (6b) und einem Rand (6c), die eine Aufnahme bilden, die zum Empfang der entnommenen Hornhaut (3) bestimmt ist, wobei die Aufnahme die gute Zentrierung der entnommenen Hornhaut (3) sichert, wenn sie in die Vorrichtung verbracht wird, und der entnommenen Hornhaut erlaubt, beim Öffnen der Vorrichtung im OP stabil zu bleiben,
- das Einschließungsmittel einen zweiten Teil, als endothelialer Deckel (4) bezeichnet, aufweist, der ein Loch (10a) im Durchmesser der Hornhaut (3a) umfasst, umgeben von einem Rand (10b), der bestimmt ist, die entnommene Hornhaut (3) durch Andrücken des Sklerarings (3b) an die kreisrunden Nut (6b) des Übergangsteils einzuschließen,
- wobei die Vorrichtung einen dritten Teil aufweist, als epithelialer Deckel (5) bezeichnet,
- wobei die Empfangs- und Einschließungsmittel der Hornhautentnahme (3) ausgebildet sind, um den Skleraring (3b), welcher die Hornhaut (3a) umschließt, dicht einzuschließen, um eine endotheliale Kammer (18) und eine epitheliale Kammer (19), die getrennt sind, zu begrenzen, in denen Konservierungsmittel mit einem Überdruck in der endothelialen Kammer (18) fließen kann,
- wobei die endotheliale Kammer (18) von einem Raum gebildet ist, der nach dichter Kopplung des endothelialen Deckels mit dem Teil zwischen dem endothelialen Deckel (4) und dem Übergangsteil (2) ausgebildet ist,
- wobei die epitheliale Kammer (19) von einem Raum gebildet ist, der nach Kopplung des epithelialen Deckels (5) mit dem Teil (2) zwischen dem Übergangsteil und dem epithelialen Deckel (5) ausgebildet ist,
- wobei das Übergangsteil (2) und der endotheliale Deckel (4) Einlass- (7a, 11a) und Auslassöffnungen (7b, 11b) für Konservierungsmittel umfassen, mit denen Zirkulationsmittel des Konservierungsmittels und Mittel zur Bildung des Druckgradienten zwischen der endothelialen Kammer und epithelialen Kammer mit Überdruck in der endothelialen Kammer verbunden sind.

2. Vorrichtung (1) nach Anspruch 1, **dadurch gekennzeichnet, dass** der endotheliale Deckel (4) einen Schlitz umfasst, der den Durchgang eines Objektivs eines Mikroskops oder jedes anderen Instruments erlaubt, das näher an der Hornhaut sein muss und zur Analyse oder zur Behandlung der Hornhaut durch die Vorrichtung bestimmt ist.

3. Vorrichtung (1) nach einem der Ansprüche 1 bis 2, **dadurch gekennzeichnet, dass** sie mit Mitteln zur Bildung eines zwischen der endothelialen Fläche und der epithelialen Fläche mit Überdruck auf der endothelialen Seite, der beispielsweise gleich dem physiologischen Augeninnendruck entspricht, einstellbaren Druckgradienten und mit Zirkulationsmitteln einer Konservierungsflüssigkeit, die die Empfangs- und Einschließungsmittel (2, 4) der entnommenen Hornhaut (3) aufweisen, verbunden ist.

4. Vorrichtung (1) nach Anspruch 3, **dadurch gekennzeichnet, dass** die Vorrichtung ausgebildet ist, um den zwischen der endothelialen Fläche und der epithelialen Fläche mit Überdruck auf der endothelialen Seite einstellbaren Druckgradienten entweder passiv durch Verwendung von Ventilen zur passiven Kontrolle, die sich bei dem gewünschten Druck öffnen, oder aktiv durch Anschluss eines Mikro-Elektroventils, welches die Einleitung des Konservierungsmittels in die endotheliale Kammer gemäß einem von dem Benutzer festgelegten Sollwert und in Abhängigkeit von dem von einem Mikrodrucksensor gemessenen Druck in der endothelialen Kammer steuert, zu erzeugen und einzustellen.

5. Vorrichtung (1) nach einem der Ansprüche 1 bis 4, **dadurch gekennzeichnet, dass** der endotheliale Deckel (4) eine Rinne (12) in Kontinuität mit der Einlassöffnung (11a) umfasst, welche die Ankunft von frischem Konservierungsmittel direkt auf dem Endothelium der Hornhaut (3a) erlaubt.

6. Vorrichtung (1) nach einem der Ansprüche 1 bis 4, **dadurch gekennzeichnet, dass** die endotheliale (18) und epitheliale (19) Kammer technische Öffnungen (11c, 7c) aufweisen, die imstande sind, die Entnahme von Konservierungsmittelprobe zur mikrobiologischen oder biochemischen Analyse oder die Injektion einer beliebigen Substanz, vor allem um die Zellzählungen zu fördern, aufweist, ohne die Sterilität des Inneren des Bioreaktors zu beeinträchtigen.

7. Vorrichtung (1) nach einem der Ansprüche 1 bis 6, **dadurch gekennzeichnet, dass** der endotheliale Deckel (4) und der epitheliale Deckel (5) beidseits der entnommenen Hornhaut (3) transparent sind, was die Analyse aller Schichten der Hornhaut (3a) erlaubt, ohne den Hornhaut-Bioreaktor (1) öffnen zu müssen.

8. Vorrichtung (1) nach einem der Ansprüche 1 bis 7, **dadurch gekennzeichnet, dass** die Vorrichtung ausgebildet ist, um die Temperatur der Konservierungsflüssigkeit auf eine Temperatur von 1 bis 40 Grad Celsius, beispielsweise auf die physiologische Temperatur der Hornhaut, einzustellen.

9. Vorrichtung (1) nach einem der Ansprüche 1 bis 8, **dadurch gekennzeichnet, dass** der endotheliale Deckel (4) aus zwei Teilen hergestellt ist, wobei ein erster Teil (4a) das Loch (10a) und seinen Rand (10b), die dem Einschluss der entnommenen Hornhaut (3) durch Andrücken der Sklera (3b) dienen, die Flüssigkeitseinlass- (11a), -auslassöffnungen (11b) und die technische Öffnung (11c) und einen zweiten transparenten Teil (4b), der die Beobachtung der Hornhaut (3a) von einer Seite zur anderen umfasst, und wobei die zwei Teile (4a, 4b) imstande sind, sich dicht untereinander beispielsweise durch Kleben zu verfügen.

10. Vorrichtung (1) nach einem der Ansprüche 1 bis 9, **dadurch gekennzeichnet, dass** der endotheliale Deckel (4) und das Übergangsteil (2) komplementäre Verriegelungsmittel (14a, 14b, 8) miteinander umfassen, die erlauben, sie in fest verbundener und dichter Position zu halten.

11. Vorrichtung (1) nach Anspruch 10, **dadurch gekennzeichnet, dass** die komplementären Verriegelungsmittel in Form von Schienen (14a) auf dem endothelialen Deckel (2) vorliegen, die imstande sind, ein Verriegelungssystem (14b) aufzunehmen, das eine Rinne mit geneigten Rand aufweist, die mit einer komplementär geformten Rinne (8) zusammenwirkt, die im Umfang des Übergangsteils (2) ausgebildet ist, so dass beim Gleiten des Verriegelungssystems (14b) auf der Schiene (14a) die zwei geneigten Flächen (14f, 8) gegenübertreten, wodurch ein schrittweises Verspannen des endothelialen Deckels (4) auf dem Übergangsteil (2) erlaubt wird, um die optimale Kompression des Sklerarings (3b) zu sichern, ohne die Hornhaut (3a) zu beschädigen.

12. Vorrichtung (1) nach Anspruch 11, **dadurch gekennzeichnet, dass** die komplementären Verriegelungsmittel (8, 14b) auf ihren zwei geneigten Rändern mikrogerippte Oberflächen aufweisen, die durch Erhöhung des Reibungsmoments zwischen ihnen ein Lösen zur Unzeit verhindern.

13. Vorrichtung (1) nach einem der Ansprüche 1 bis 12, **dadurch gekennzeichnet, dass** der epitheliale Deckel (5) und das Übergangsteil (4) miteinander dicht verbunden sind, insbesondere mittels einer Kleeblattdichtung (16a), die die Verlagerung des epithelialen Deckels (5) in Bezug zum Übergangsteil (4) erlaubt.

## Claims

1. A device (1) for the storage of a cornea specimen (3) comprising means for the reception and entrapment of the cornea specimen (3), connected to means for the creation of a pressure gradient with overpressure on the endothelial side and to preservation liquid circulation means in layouts that present the means for the reception and entrapment of the cornea specimen (3), wherein:
- the reception means comprises a first section, called intermediate component (2) which comprises a hole (6a) of the diameter of the cornea (3a) surrounded by a circumferential groove (6b) and an edge (6c) forming a cavity intended to receive the cornea specimen (3), said cavity ensures that the cornea specimen (3) is correctly centered during its insertion in the device and allows said cornea specimen to remain stable during the opening of the device at the operating theater;
- the entrapment means comprises a second section, called endothelial lid (4) which comprises a hole (10a) of the diameter of the cornea (3a) surrounded by an edge (10b) intended to trap the cornea specimen (3) by crushing the sclera ciliary zone (3b) on the circumferential groove (6b) of the intermediate component;
- the device comprises a third section, called epithelial lid (5);
- the means for the reception and entrapment of the cornea specimen (3) are adapted to entrap the sclera ciliary zone (3b) surrounding the cornea (3a) in a tight manner to delimit an endothelial chamber (18) and an epithelial chamber (19) separated in which the preservation medium can circulate with an overpressure in the endothelial chamber (18);
- the endothelial chamber (18) is composed of a space formed between the endothelial lid (4) and the intermediate component (2), after a tight connection of said endothelial lid with said component;
- the epithelial chamber (19) is composed of a space formed between the intermediate component and the epithelial lid (5), after connection of said epithelial lid (5) with said component (2) ;
- the intermediate component (2) and the endothelial lid (4) comprise inlet (7a, 11a) and outlet (7b, 11b) orifices for the preservation medium which are connected to the means for the circulation of the preservation medium and the creation of the pressure gradient between endothelial chamber and epithelial chamber with overpressure in the endothelial chamber.

2. The device (1) according to claim 1, **characterized in that** the endothelial lid (4) comprises a notch that allows passing a microscope objective or any other instrument that needs to be closer to the cornea and intended for the analysis or treatment of the cornea through the device.

3. The device (1) according to any one of claims 1 to 2, **characterized in that** it is connected to means for the creation of an adjustable pressure gradient between the endothelial face and the epithelial face, with overpressure of the endothelial side, equal to the physiological intra-ocular pressure for example, and to means for the circulation of a preservation liquid that present the means for the reception and entrapment (2, 4) of the cornea specimen (3).

4. The device (1) according to claim 3, **characterized in that** the device is adapted to generate and regulate the adjustable pressure gradient between the endothelial face and the epithelial face, with overpressure on the endothelial side either passively using passive control valves opening at the desired pressure, or actively via the feedback control of a micro-solenoid valve controlling the injection of the preservation medium in the endothelial chamber according to a set point set by the user and as a function of the pressure in the endothelial chamber measured by a pressure micro-sensor.

5. The device (1) according to any one of claims 1 to 4, **characterized in that** the endothelial lid (4) comprises a drip rail (12) as a continuum with the inlet orifice (11a) allowing the arrival of fresh preservation medium directly on the corneal endothelium (3a).

6. The device (1) according to any one of claims 1 to 4, **characterized in that** the endothelial (18) and epithelial (19) chambers comprise technical orifices (11c, 7c), able to allow removal of preservation medium samples for microbiological or biochemical analysis purposes, or the injection of any substance, especially to favor cell counts, without compromising the sterility within the bioreactor.

7. The device (1) according to any one of claims 1 to 6, **characterized in that** the endothelial lid (4) and the epithelial lid (5), are transparent throughout the cornea specimen (3) for analyzing all the layers of the cornea (3a) without having to open the corneal bioreactor (1).

8. The device (1) according to any one of claims 1 to 7, **characterized in that** the device is adapted to regulate the preservation liquid temperature at a temperature from 1 to 40 degrees Celsius, at the physiological temperature of the cornea for example.

9. The device (1) according to any one of claims 1 to 8, **characterized in that** the endothelial lid (4) is formed of two sections, a first section (4a) comprising the hole (10a) and its edge (10b) used for trapping the cornea specimen (3) by crushing the sclera (3b), the liquid inlet (11a), outlet (11b) orifices and the technical orifice (11c), and a second transparent section (4b) allowing examining the cornea (3a) throughout, and the two sections (4a, 4b) being capable to be nested in a tight manner between them, by gluing them for example.

10. The device (1) according to any one of claims 1 to 9, **characterized in that** the endothelial lid (4) and the intermediate component (2) comprise additional means for locking them to each other (14a, 14b, 8), enabling to maintain them in a joined and tight position.

11. The device (1) according to claim 10, **characterized in that** the additional means for locking are in the form of rails (14a) on the endothelial lid (2) capable of receiving a locking system (14b) comprising an edge slanted drip rail cooperating with a drip rail (8) made at the circumference of the intermediate component (2) and with a complementary shape, so that when the locking system (14b) slides on the rail (14a), the two slanted surfaces (14f, 8) encounter, allowing a progressive tightening of the endothelial lid (4) on the intermediate component (2) in order to ensure the optimal compression of the scleral ciliary zone (3b) without damaging the cornea (3a).

12. The device (1) according to claim 11, **characterized in that** said additional means for locking (8, 14b) comprise on their two slanted edges, micro-crenellated surfaces that prevent a sudden unblocking by increasing the friction torque between them.

13. The device (1) according to any one of claims 1 to 12, **characterized in that** the epithelial lid (5) and the intermediate component (4) are assembled in a tight manner, especially via the use of a Quad-ring (16a), allowing the displacement of the epithelial lid (5) with respect to the intermediate component (4).
